# EUROPEAN PATENT APPLICATION

(11) **EP 4 769 744 A1**
(43) Date of publication of application: **01.07.2026**
(21) Application number: 25860981.7
(22) Date of filing: 21.08.2025
(51) Int. Cl.: H01M 50/30, H01M 50/198, H01M 50/178, H01M 50/191, H01M 10/42

(54) **SECONDARY BATTERY**

(30) Priority: 26.08.2024 KR 20240114614; 12.08.2025 KR 20250111355
(71) Applicant: LG Energy Solution, Ltd., Seoul 07335 (KR)
(72) Inventor: PARK, Eun Suk, Daejeon 34122 (KR); LEE, Yu Jin, Daejeon 34122 (KR); JU, Hye Yeong, Daejeon 34122 (KR); YU, Hyung Kyun, Daejeon 34122 (KR)
(74) Representative: Plasseraud IP
(86) International application number: PCT/KR2025/012711
(87) International publication number: WO 2026/049414

(57) **Abstract**

The present disclosure relates to a secondary battery, and more specifically, to a secondary battery that can be repeatedly charged and discharged. A secondary battery according to an embodiment of the present disclosure may include an electrode assembly including an electrode and a separator; an exterior material accommodating the electrode assembly; an electrode lead connected to the electrode assembly and protruding to the outside of the exterior material; a lead film covering at least a portion of the electrode lead to insulate the electrode lead from the exterior material; and a gas emission guide portion provided between the electrode lead and the lead film and forming a gas emission path through which the internal gas of the exterior material is emitted to the outside when the internal pressure of the exterior material increases, wherein a distance between one end of the lead film adjacent to the electrode assembly and the gas emission guide portion may be narrower than a distance between the other end of the lead film and the gas emission guide portion.

## Description

### TECHNICAL FIELD

### CROSS-REFERENCE TO RELATED APPLICATIONS

The present application is based on and claims priority from Korean Patent Application No. 10-2024-0114614, filed on August 26, 2024 and Korean Patent Application No. 10-2025-0111355, filed on August 12, 2025, with the Korean Intellectual Property Office, the disclosure of which is incorporated herein in its entirety by reference.

### TECHNICAL FIELD

The present disclosure relates to a secondary battery, and more specifically, to a secondary battery that can be repeatedly charged and discharged.

### BACKGROUND ART

A secondary battery that can be repeatedly charged and discharged may be classified into a cylindrical, prismatic, and pouch-type battery depending on the shape thereof. Among them, the pouch-type secondary battery uses a sheet-shaped exterior material formed of a multilayer film including a metal layer (foil) and a resin layer coated on both surfaces of the metal layer, which may significantly reduce battery weight compared to a cylindrical or prismatic battery using a metal can.

An electrolyte may be accommodated together with an electrode assembly inside the exterior material of such a pouch-type secondary battery. At this time, residual moisture of the electrolyte or moisture infiltrated from the outside may react with the lithium salt inside the exterior material of the pouch-type secondary battery to generate hydrogen fluoride (HF), and gases such as carbon dioxide, carbon monoxide, ethylene, and methane may be generated due to decomposition of the electrolyte.

Additionally, depending on the material of the positive electrode included in the electrode assembly of the pouch-type secondary battery, hydrogen and HF may be further generated, which may cause overheating due to overcharge and internal short circuit during the process of charging and discharging the secondary battery. Accordingly, a large amount of gas may be generated inside the exterior material.

The internal pressure of the exterior material may increase due to such gas, and the increased internal pressure may cause a swelling phenomenon in which the exterior material swells or a venting phenomenon in which a portion of the exterior material bursts. Therefore, the pouch-type secondary battery requires a structure capable of efficiently emitting gas inside the exterior material to prevent the swelling or venting phenomenon of the exterior material.

### DISCLOSURE

### TECHNICAL PROBLEM

The present disclosure is designed to solve the problems of the related art, and therefore the present disclosure is directed to providing a secondary battery having a structure capable of efficiently emitting the internal gas of an exterior material.

### TECHNICAL SOLUTION

A secondary battery according to the present disclosure may include an electrode assembly including an electrode and a separator; an exterior material accommodating the electrode assembly; an electrode lead connected to the electrode assembly and protruding to the outside of the exterior material; a lead film covering at least a portion of the electrode lead to insulate the electrode lead from the exterior material; and a gas emission guide portion provided between the electrode lead and the lead film and forming a gas emission path through which the internal gas of the exterior material is emitted to the outside when the internal pressure of the exterior material increases, wherein a distance between one end of the lead film adjacent to the electrode assembly and the gas emission guide portion may be narrower than a distance between the other end of the lead film and the gas emission guide portion.

The gas emission path may be formed between one surface of the gas emission guide portion and the lead film.

The shape of the gas emission path may correspond to the shape of the gas emission guide portion.

A first portion of the lead film facing the gas emission guide portion may remain in a non-adhesive state with the gas emission guide portion, and a second portion of the lead film between the gas emission guide portion and the internal space of the exterior material may be weakly bonded to the electrode lead compared to the remaining portion of the lead film excluding the first and second portions.

The gas emission guide portion may include a first member extending along the width direction of the electrode lead; and a second member extending from one end of the first member toward the internal space of the exterior material.

The width of the first member may be greater than the width of the second member.

The plurality of second members may be connected to one end of the first member.

A first portion of the lead film facing the gas emission guide portion may remain in a non-adhesive state with the gas emission guide portion, and a second portion of the lead film between the second member and the internal space of the exterior material may be weakly bonded to the electrode lead compared to the remaining portion of the lead film excluding the first and second portions

A distance between one end of the lead film adjacent to the electrode assembly and the second member may be narrower than a distance between the other end of the lead film and the first member.

A gas absorbing member for absorbing the internal gas may be provided in the gas emission path.

The gas absorbing member may include a carbon dioxide absorbent absorbing carbon dioxide from the internal gas.

The gas absorbing member may be a solid powder containing potassium carbonate or sodium carbonate.

The gas absorbing member may be a sheet-shaped member attached to the gas emission member and may contain potassium carbonate or sodium carbonate.

### ADVANTAGEOUS EFFECTS

The secondary battery according to an embodiment of the present disclosure may include a gas emission guide portion provided between the electrode lead and the lead film and forming a gas emission path through which the internal gas of the exterior material is emitted to the outside when the internal pressure of the exterior material increases. Here, a distance between one end of the lead film adjacent to the electrode assembly and the gas emission guide portion may be formed to be narrower than a distance between the other end of the lead film and the gas emission guide portion. In this case, even when gas is generated inside the exterior material, the internal gas of the exterior material may be effectively emitted without damaging the exterior material.

Meanwhile, the effects according to the present disclosure are not limited by the contents exemplified above, and more various effects are included in this specification.

### DESCRIPTION OF DRAWINGS

FIG. 1 is a perspective view illustrating a secondary battery according to the present disclosure.
FIG. 2 is a cross-sectional view illustrating a portion of a cross-section taken along line A-A' of FIG. 1.
FIG. 3 is a view showing a state in which a gas emission guide portion is provided between an electrode lead and a lead film.
FIG. 4 is a view for describing that a portion of the lead film between the gas emission guide portion and an internal space of an exterior material is weakly bonded to the electrode lead compared to other portion of the lead film.
FIG. 5 is a view for describing that a portion of the lead film between a second member and the internal space of the exterior material is weakly bonded to the electrode lead compared to other portion of the lead film.
FIG. 6 is a view showing a state in which a gas absorbing member is provided in a gas emission path.
FIG. 7 is a view showing a state in which the gas absorbing member is a solid powder.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a secondary battery according to the present disclosure will be described with reference to the drawings.

### First embodiment

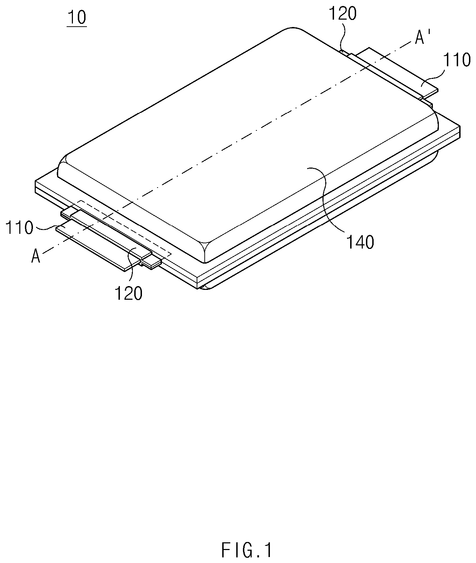

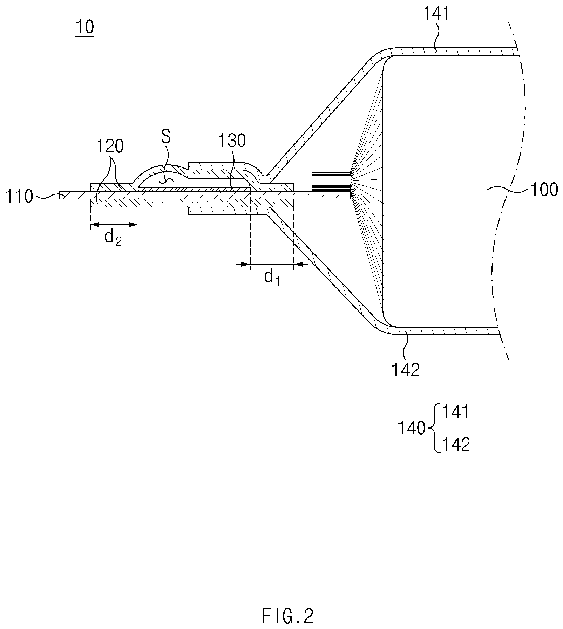

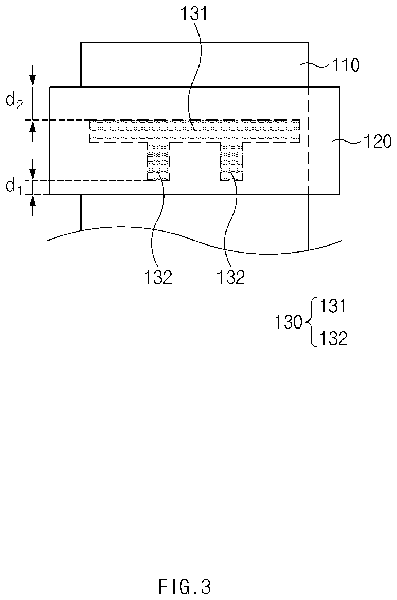

FIG. 1 is a perspective view illustrating a secondary battery according to the present disclosure. FIG. 2 is a cross-sectional view illustrating a portion of a cross-section taken along line A-A' of FIG. 1. FIG. 3 is a view showing a state in which a gas emission guide portion is provided between an electrode lead and a lead film.

Referring to FIGS. 1 to 3, a secondary battery 10 according to the first embodiment of the present disclosure may include an electrode assembly 100 including an electrode and a separator; an exterior material 140 accommodating the electrode assembly 100; an electrode lead 110 connected to the electrode assembly 100 and protruding to the outside of the exterior material 140; a lead film 120 covering at least a portion of the electrode lead 110 to insulate the electrode lead 110 from the exterior material 140; and a gas emission guide portion 130 provided between the electrode lead 110 and the lead film 120 and forming a gas emission path S through which the internal gas of the exterior material 140 is emitted to the outside when the internal pressure of the exterior material 140 increases. At this time, a distance (d₁) between one end of the lead film 120 adjacent to the electrode assembly 100 and the gas emission guide portion 130 may be formed to be narrower than a distance (d₂) between the other end of the lead film 120 and the gas emission guide portion 130.

The secondary battery 10 according to the first embodiment of the present disclosure may effectively emit internal gas without damaging the exterior material 140 even when gas is generated inside the exterior material 140 due to repeated charging and discharging. Specifically, the internal gas of the exterior material 140 may flow into the gas emission path S through the inner portion (d₁) of the lead film 120.

In this case, the length of the inner portion (d₁) of the lead film 120 is shorter than the length of the outer portion (d₂) of the lead film 120, so that the length of the inflow path where the internal gas of the exterior material 140 flows into the gas emission path S may be formed relatively short. Accordingly, the internal gas of the exterior material 140 may flow into the gas emission path S relatively easily, and thus the internal gas of the exterior material 140 may be efficiently emitted.

Additionally, when the internal pressure of the exterior material 140 increases due to repeated charging and discharging of the secondary battery 10, the inner portion (d₁) of the lead film 120 may be pushed outward, and the internal gas of the exterior material 140 may flow into the gas emission path S through the opened portion. At this time, the length of the inner portion (d₁) of the lead film 120 is shorter than the length of the outer portion (d₂) of the lead film 120, so that the length of the portion of the lead film 120 pushed to open the gas emission path S may be relatively short. In this case, the gas emission path S may be opened relatively easily, and thus the internal gas of the exterior material 140 may be easily emitted.

The secondary battery 10 may have a form in which the electrode assembly 100 is accommodated inside the exterior material 140. For example, the secondary battery 10 according to the present disclosure may refer to a pouch-type secondary battery among various types of secondary batteries that can be charged and discharged. This is merely one example, and the shape of the secondary battery 10 may vary.

The electrode assembly 100 may include a positive electrode, a negative electrode, and a separator. Here, the separator may be disposed between the positive electrode and the negative electrode to physically separate the positive electrode and the negative electrode. The electrode assembly 100 may be in a stacked form where a positive electrode, a negative electrode, and a separator are laminated, or in a jelly-roll form where a positive electrode, a negative electrode, and a separator are wound.

The electrode assembly 100 may be accommodated inside the exterior material 140. The exterior material 140 may be a pouch-type exterior material including an inner layer, a metal layer, and an outer layer. Here, the inner layers of the pouch-type exterior material may be bonded to each other by heat and pressure to seal the internal space of the exterior material 140. That is, after the exterior material 140 accommodates the electrode assembly 100 therein, the inner layer may be sealed by heat and pressure. Meanwhile, Al, STS, or the like may be mainly used for the metal layer, and the outer layer may be made of an insulating material.

The inner layer capable of sealing the exterior material 140 through sealing may be made of one or more materials selected from the group consisting of polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fiber. In particular, polyolefin resins such as polypropylene (PP) or polyethylene (PE) may be mainly used.

The secondary battery 10 may include an electrode lead 110. The electrode lead 110 may be electrically connected to the electrode assembly 100 and may be disposed to protrude to the outside of the exterior material 140. The secondary battery 10 may provide electrical energy to the outside by the electrode lead 110 protruding to the outside of the exterior material 140. Therefore, the electrode lead 110 may be a conductor.

The lead film 120 may cover the electrode lead 110 to insulate the exterior material 140 and the electrode lead 110 from each other. Specifically, the lead film 120 may be disposed on both surfaces of the electrode lead 110 to cover the electrode lead 110. The lead films 120 are configured in a pair, and may each be disposed on both surfaces of the electrode lead 110.

Additionally, the lead film 120 may be formed as a semi-permeable membrane that does not allow the electrolyte to pass through but allows gas generated inside the exterior material 140 to pass through. In this case, the gas generated inside the exterior material 140 may be emitted to the outside of the exterior material 140 through the lead film 120, which is a semi-permeable membrane, through the gas emission path S described above.

Specifically, when the internal pressure of the exterior material 140 accommodating the electrode assembly 100 increases, the internal gas of the exterior material 140 may flow into the gas emission path S through the inner portion (d₁) of the lead film 120 formed as a semi-permeable membrane and/or a minute empty space between the inner portion (d₁) of the lead film 120 and the electrode lead 110. The gas introduced into the gas emission path S may be emitted to the outside of the exterior material 140 through the lead film 120, which is a semi-permeable membrane.

Additionally, when the internal pressure of the exterior material 140 increases due to repeated charging and discharging of the secondary battery 10, the inner portion (d₁) of the lead film 120 may be pushed outward, and the gas emission path S may be opened toward the internal space of the exterior material 140. In this case, the internal gas of the exterior material 140 may flow into the gas emission path S through the opened portion. The gas introduced into the gas emission path S may be emitted to the outside of the exterior material 140 through the lead film 120, which is a semi-permeable membrane.

Meanwhile, the secondary battery 10 may generate gas as it is repeatedly charged and discharged, and thus the pressure inside the exterior material 140 may increase. If the pressure inside the exterior material 140 increases excessively, venting or the like may occur, thereby causing the secondary battery 10 to lose its function.

Specifically, an electrolyte may be accommodated together with the electrode assembly 100 inside the exterior material 140 of the secondary battery 10. At this time, residual moisture of the electrolyte or moisture infiltrated from the outside may react with the lithium salt inside the exterior material 140 of the secondary battery 10 to generate HF, and gases such as carbon dioxide, carbon monoxide, ethylene, and methane may be generated due to decomposition of the electrolyte.

Additionally, depending on the material of the positive electrode included in the electrode assembly 100 of the secondary battery 10, hydrogen and HF may be additionally generated, which may cause overheating due to overcharge and internal short circuit during the charging and discharging process. Accordingly, a large amount of gas may be generated inside the exterior material 140. The pressure inside the exterior material may increase due to such gas, and the increased pressure may cause a swelling phenomenon in which the exterior material 140 swells or a venting phenomenon in which a portion of the exterior material 140 bursts.

The secondary battery 10 according to the present disclosure may include a configuration capable of emitting gas inside the exterior material 140 to the outside of the exterior material 140 to prevent the occurrence of a venting phenomenon. Specifically, the secondary battery 10 may include a gas emission guide portion 130 forming a gas emission path S through which the gas inside the exterior material 140 is emitted.

The gas emission guide portion 130 is a member interposed between the electrode lead 110 and the lead film 120, and one surface of the gas emission guide portion 130 may be bonded to the electrode lead 110. On the other hand, the other surface of the gas emission guide portion 130 is not attached to the lead film 120, so that a movement space through which gas may move may be formed between the gas emission guide portion 130 and the lead film 120. This movement space may be a gas emission path S through which the internal gas of the exterior material 140 is emitted.

Additionally, the distance (d₁) between one end of the lead film 120 of the secondary battery 10 adjacent to the electrode assembly 100 and the gas emission guide portion 130 may be formed to be narrower than the distance (d₂) between the other end of the lead film 120 and the gas emission guide portion 130. The lead film 120 is bonded to the electrode lead 110, so that the coupling force between the outer portion (d₂) of the lead film 120 and the electrode lead 110 may be maintained stronger than the coupling force between the inner portion (d₁) of the lead film 120 and the electrode lead 110.

At this time, the lead film 120 may be configured as a semi-permeable membrane that does not allow the electrolyte to pass through but allows gas to pass through. That is, when the internal pressure of the exterior material 140 accommodating the electrode assembly 100 increases, the internal gas of the exterior material 140 may flow into the gas emission path S through the inner portion (d₁) of the lead film 120. The length of the inner portion (d₁) of the lead film 120 is formed to be relatively short, so that the internal gas of the exterior material 140 may easily flow into the gas emission path S through the inner portion (d₁) of the lead film 120.

In particular, when the internal pressure of the exterior material 140 increases due to repeated charging and discharging of the secondary battery 10, an outward pressure may be applied to the inner portion (d₁) of the lead film 120. In this case, at least a portion of the inner portion (d₁) of the lead film 120 may be pushed toward the gas emission path S. That is, the length of a region of the inner portion (d₁) of the lead film 120 that is coupled to the electrode lead 110 may be shortened.

Additionally, when the internal gas of the exterior material 140 flows into the gas emission path S, a portion of the lead film 120 may be stretched. Specifically, the portion of the lead film 120 above the gas emission path S is not bonded to the gas emission guide portion 130, and thus the length thereof may be stretched by the gas introduced into the gas emission path S. That is, as the amount of gas flowing into the gas emission path S increases, the overall volume of the gas emission path S may increase.

At this time, as the amount of gas flowing into the gas emission path S increases, the portion of the lead film 120 covering the gas emission path S may be stretched. Referring to FIG. 1 as an example, if the amount of gas flowing into the gas emission path S increases, the portion of the lead emission film 120 above the gas emission path S may be stretched. The stretched portion of the lead emission film 120 has a lower density than before being stretched, and thus the rate at which internal gas is emitted through the stretched portion may increase.

After the internal gas has sufficiently flowed into the gas emission path S, the internal gas may be emitted to the outside through the lead film 120 formed of a semi-permeable membrane. Therefore, when the internal pressure of the exterior material 140 increases, the secondary battery 10 according to the present disclosure may emit the internal gas of the exterior material 140 to the outside of the exterior material 140.

The gas emission path S is an empty space formed above the gas emission guide portion 130, and may have various shapes. For example, the shape of the gas emission path S may correspond to the shape of the gas emission guide portion 130.

The gas emission guide portion 130 may include a first member 131 extending along the width direction of the electrode lead 110 and a second member 132 extending from one end of the first member 131 toward the internal space of the exterior material 140. At this time, the width of the first member 131 may be formed to be greater than the width of the second member 132.

Here, when one second member 132 is connected to one end of the first member 131, the second member 132 may be connected to the center of the first member 131. In this case, the gas emission guide portion 130 may have a roughly alphabet "T" shape. At this time, the shape of the gas emission path S may correspond to the shape of the gas emission guide portion 130, and thus the gas emission path S may also have an alphabet "T" shape.

Additionally, a plurality of second members 132 may be connected to one end of the first member 131. In this case, the gas emission guide portion 130 may have a roughly " 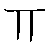 " shape. The shape of the gas emission path S may correspond to the shape of the gas emission guide portion 130, and thus the gas emission path S may have a " 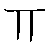 " shape.

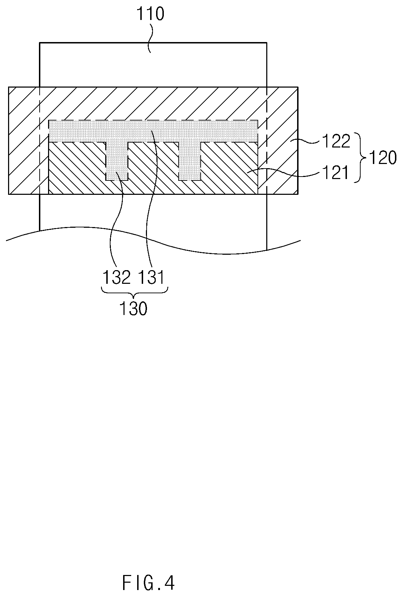

Meanwhile, FIG. 4 is a view for describing that a portion of the lead film between the gas emission guide portion and the internal space of the exterior material is weakly bonded to the electrode lead compared to other portion of the lead film. FIG. 4 illustrates that a portion 121 of the lead film 120 between the gas emission guide portion 130 and the internal space of the exterior material 140 is weakly bonded to the electrode lead 110 compared to other portion 122 of the lead film 120.

The portion of the lead film 120 facing the upper surface of the electrode lead 110 may be divided into three portions having different adhesive strengths. These portions may include a portion facing the gas emission guide portion 130, a portion 121 between the gas emission guide portion 130 and the internal space of the exterior material 140, and the remaining portion 122.

At this time, the portion facing the gas emission guide portion 130 may remain in a non-adhesive state with the gas emission guide portion 130. Additionally, the portion 121 between the gas emission guide portion 130 and the internal space of the exterior material 140 may be opened when the internal pressure of the exterior material 140 increases. When the portion 121 between the gas emission guide portion 130 and the internal space of the exterior material 140 is opened, the internal gas of the exterior material 140 may flow into the gas emission path S through the opened portion 121.

Finally, the remaining portion 122 should remain in an adhesive state even when the internal pressure of the exterior material 140 increases, and thus may be relatively strongly bonded to the electrode lead 110. In this case, even while gas is emitted through the remaining portion 122 formed of a semi-permeable membrane, the strong coupling between the portion 122 and the electrode lead 110 may still be maintained.

That is, the lead film 120 of the secondary battery 10 according to the present disclosure may be bonded to the electrode lead 110 as described above, thereby effectively emitting gas generated inside the exterior material 140 to the inside of the exterior material 140 when the internal pressure of the exterior material 140 increases.

Specifically, when the internal pressure of the exterior material 140 increases, the portion 121 of the lead film 120 between the gas emission guide portion 130 and the internal space of the exterior material 140 is detached from the electrode lead 110, and the internal space of the exterior material 140 may communicate with the gas emission path S above the gas emission guide portion 130. Thereafter, the internal gas of the exterior material 140 may be emitted to the outside by passing through the gas emission path S and through the outer portion 122 of the lead film 120, which is a semi-permeable membrane.

Additionally, during the process of emitting the internal gas to the outside, the portion 122 of the lead film 120 corresponding to the outer boundary of the gas emission guide portion 130 is strongly bonded to the electrode lead 110, and thus may remain in an adhesive state with the electrode lead 110.

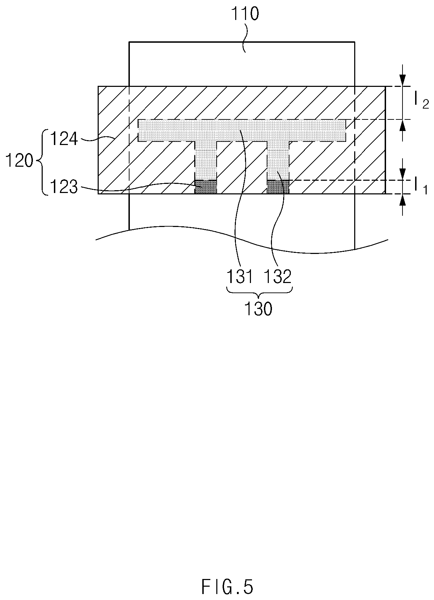

Meanwhile, FIG. 5 is a view for describing that a portion of the lead film between a second member and the internal space of the exterior material is weakly bonded to the electrode lead compared to other portion of the lead film. FIG. 5 illustrates that the portion 123 of the lead film 120 between the second member 132 and the internal space of the exterior material 140 is weakly bonded to the electrode lead 110 compared to other portion 124 of the lead film 120.

The portion of the lead film 120 facing the upper surface of the electrode lead 110 may be divided into three portions having different adhesive strengths. These portions may include a portion facing the gas emission guide portion 130, a portion 123 between the second member 132 and the internal space of the exterior material 140, and the remaining portion 124.

At this time, the portion facing the gas emission guide portion 130 may remain in a non-adhesive state with the gas emission guide portion 130. Additionally, the portion 123 between the second member 132 and the internal space of the exterior material 140 should be opened when the internal pressure of the exterior material 140 increases, and thus may maintain a weak adhesive state with the electrode lead 110. Finally, the remaining portion 124 should remain in an adhesive state even when the internal pressure of the exterior material 140 increases, and thus may be relatively strongly bonded to the electrode lead 110.

That is, the lead film 120 of the secondary battery 10 according to the present disclosure may be bonded to the electrode lead 110 as described above, thereby effectively emitting gas generated inside the exterior material 140 to the inside of the exterior material 140 when the internal pressure of the exterior material 140 increases.

Specifically, when the internal pressure of the exterior material 140 increases, the portion 123 of the lead film 120 between the second member 132 and the internal space of the exterior material 140 is detached from the electrode lead 110, and the internal space of the exterior material 140 may communicate with the gas emission path S above the gas emission guide portion 130. Thereafter, the internal gas of the exterior material 140 may be emitted to the outside by passing through the gas emission path S and through the outer portion 124 of the lead film 120, which is a semi-permeable membrane.

During the process of emitting the internal gas to the outside, the portion 124 of the lead film 120 corresponding to the outer boundary of the gas emission guide portion 130 is strongly bonded to the electrode lead 110, and thus may remain in an adhesive state with the electrode lead 110.

Meanwhile, the distance (1₁) between one end of the lead film 120 adjacent to the electrode assembly 100 and the second member 132 may be formed to be narrower than the distance (1₂) between the other end of the lead film 120 and the first member 131. In this case, when the internal pressure of the exterior material 140 increases, the coupling force between the outer portion (1₂) of the lead film 120 and the electrode lead 110 may be maintained stronger than the coupling force between the inner portion (1₁) of the lead film 120 and the electrode lead 110.

When the pressure of the internal space of the exterior material 140 accommodating the electrode assembly 100 increases, the internal gas of the exterior material 140 may flow into the gas emission path S through the inner portion (1₁) of the lead film 120 formed of a semi-permeable membrane. The internal gas introduced into the gas emission path S may be emitted to the outside through the outer portion (1₂) of the lead film 120.

### Second embodiment

A secondary battery according to the second embodiment of the present disclosure differs from the first embodiment in that a gas absorbing member is provided in the gas emission path. Contents common to the first embodiment will be omitted as much as possible, and the second embodiment will be described focusing on the differences. That is, it is obvious that contents not described in the second embodiment may be regarded as contents of the first embodiment, if necessary.

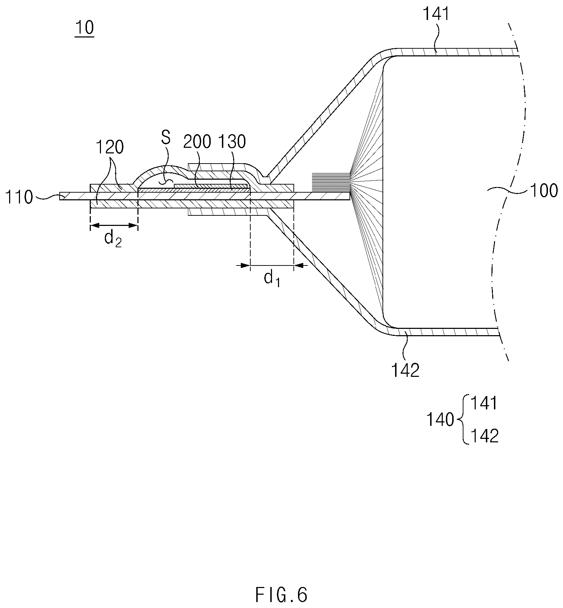

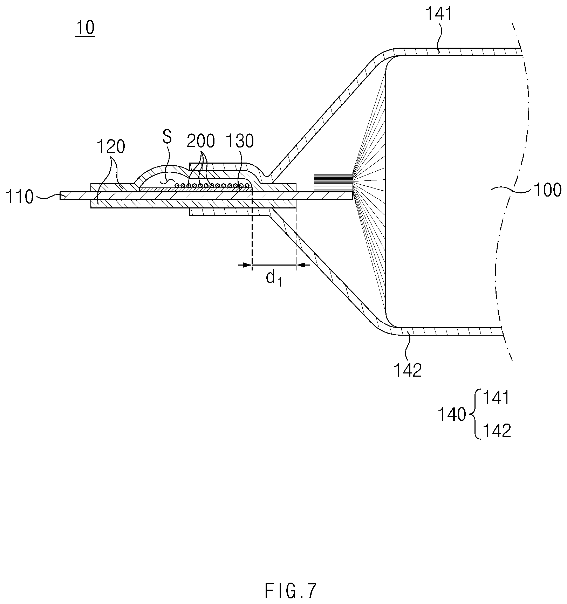

FIG. 6 is a view showing a state in which a gas absorbing member is provided in a gas emission path, and FIG. 7 is a view showing a state in which the gas absorbing member is a solid powder.

Referring to FIG. 6, a gas absorbing member 200 for absorbing internal gas may be provided in the gas emission path S. In this case, the gas passing through the gas emission path S among the internal gas of the exterior material 140 is absorbed by the gas absorbing member 200, and thus there is an advantageous effect of preventing venting or damage to the exterior material 140 by lowering the internal pressure of the exterior material 140.

The gas absorbing member 200 is provided in the gas emission path S and may absorb various types of internal gases. For example, the gas absorbing member 200 may include a carbon dioxide absorbent absorbing carbon dioxide from the internal gas of the exterior material 140. Such a carbon dioxide absorbent may contain potassium carbonate or sodium carbonate.

Additionally, the gas absorbing member 200 is a dry absorbing member provided in the gas emission path S and may have various structures and shapes. In particular, the gas absorbing member 200 may be a sheet-shaped member attached to the electrode lead 110.

Specifically, the gas absorbing member 200 is a sheet formed by placing a powdered carbon dioxide absorbent containing potassium carbonate or sodium carbonate into a mold and curing it, and may be attached to the gas emission member 130 positioned below the gas emission path S. In this case, even when the internal pressure of the exterior material 140 increases, the gas absorbing member 200 remains fixed in position, thereby preventing the gas absorbing member 200 from flowing into the internal space of the exterior material 140 and floating.

Referring to FIG. 7, the gas absorbing member 200 may be a solid powder containing potassium carbonate or sodium carbonate. Specifically, the gas absorbing member 200 is a carbon dioxide absorbent containing potassium carbonate or sodium carbonate, and may be provided in powder form in the gas emission path S. In this case, the effective contact surface area where the gas absorbing member 200 and the internal gas of the exterior material 140 contact each other may be maximized, thereby effectively absorbing the internal gas of the exterior material 140.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

| | | | |
|---|---|---|---|
| 10: | Secondary battery | 100: | Electrode assembly |
| 110: | Electrode lead | 120: | Lead film |
| 130: | Gas emission guide portion | 131: | First member |
| 132: | Second member | 140: | Exterior material |
| 141: | Upper exterior material | 142: | Lower exterior material |
| 200: | Gas absorbing member | S: | Gas emission path |

## Claims

1. A secondary battery comprising:
an electrode assembly comprising an electrode and a separator;
an exterior material accommodating the electrode assembly;
an electrode lead connected to the electrode assembly and protruding to the outside of the exterior material;
a lead film covering at least a portion of the electrode lead to insulate the electrode lead from the exterior material; and
a gas emission guide portion provided between the electrode lead and the lead film and forming a gas emission path through which the internal gas of the exterior material is emitted to the outside when the internal pressure of the exterior material increases,
wherein a distance between one end of the lead film adjacent to the electrode assembly and the gas emission guide portion is narrower than a distance between the other end of the lead film and the gas emission guide portion.

2. The secondary battery according to claim 1,
wherein the gas emission path is formed between one surface of the gas emission guide portion and the lead film.

3. The secondary battery according to claim 2,
wherein the shape of the gas emission path corresponds to the shape of the gas emission guide portion.

4. The secondary battery according to claim 1,
wherein a first portion of the lead film facing the gas emission guide portion remains in a non-adhesive state with the gas emission guide portion, and
wherein a second portion of the lead film between the gas emission guide portion and the internal space of the exterior material is weakly bonded to the electrode lead compared to the remaining portion of the lead film excluding the first and second portions.

5. The secondary battery according to claim 1,
wherein the gas emission guide portion comprises:
a first member extending along the width direction of the electrode lead; and
a second member extending from one end of the first member toward the internal space of the exterior material.

6. The secondary battery according to claim 5,
wherein the width of the first member is greater than the width of the second member.

7. The secondary battery according to claim 6,
wherein the plurality of second members are connected to one end of the first member.

8. The secondary battery according to claim 5,
wherein a first portion of the lead film facing the gas emission guide portion remains in a non-adhesive state with the gas emission guide portion, and
wherein a second portion of the lead film between the second member and the internal space of the exterior material is weakly bonded to the electrode lead compared to the remaining portion of the lead film excluding the first and second portions.

9. The secondary battery according to claim 5,
wherein a distance between one end of the lead film adjacent to the electrode assembly and the second member is narrower than a distance between the other end of the lead film and the first member.

10. The secondary battery according to claim 1,
wherein a gas absorbing member for absorbing the internal gas is provided in the gas emission path.

11. The secondary battery according to claim 10,
wherein the gas absorbing member comprises a carbon dioxide absorbent absorbing carbon dioxide from the internal gas.

12. The secondary battery according to claim 10,
wherein the gas absorbing member is a solid powder containing potassium carbonate or sodium carbonate.

13. The secondary battery according to claim 10,
wherein the gas absorbing member is a sheet-shaped member attached to the gas emission member and contains potassium carbonate or sodium carbonate.
